# EUROPÄISCHE PATENTANMELDUNG

(11) **EP 1 640 675 A2**
(43) Veröffentlichungstag der Anmeldung: **29.03.2006**
(21) Anmeldenummer: 05013877.5
(22) Anmeldetag: 28.06.2005
(51) Int. Cl.: F25B 29/00, F24F 1/00

(54) **Anlage zur Übergabe thermischer Energie**

(30) Priorität: 22.09.2004 DE 202004014875 U
(71) Anmelder: aqua signal Aktiengesellschaft, 28307 Bremen (DE)
(72) Erfinder: Halfmann, Horst, 59494 Soest (DE); Eickhoff, Erhard, 27412 Wilstedt (DE)
(74) Vertreter: Heiland, Karsten

(57) **Zusammenfassung**

Die Erfindung betrifft eine Anlage zur Übergabe thermischer Energie von einem ersten strömenden Medium an ein zweites strömendes Medium oder umgekehrt, mit einem ersten Wärmetauscher (10), einem zweiten Wärmetauscher (11) und einer Kompressions-Kälte-Maschine (12), wobei im ersten Wärmetauscher (10) thermische Energie zwischen dem ersten strömenden Medium und einem Kältemittel der Kompressions-Kälte-Maschine (12) austauschbar ist und im zweiten Wärmetauscher (11) thermische Energie zwischen dem Kältemittel und dem zweiten strömenden Medium austausbar ist, so dass im Ergebnis eines der beiden strömenden Medien kühlbar und das andere erwärmbar ist

## Beschreibung

Die Erfindung betrifft eine Anlage zur Übergabe thermischer Energie von einem ersten strömenden Medium an ein zweites strömendes Medium oder umgekehrt.

Kühlanlagen auf der Basis von Kompressions-Kälte-Maschinen sind bekannt. Eine Anwendung ist die Nutzung von Klimaanlagen. Eine weitere Anwendung betrifft die Kühlung von Maschinen, Aggregaten oder anderen Wärmeerzeugern. In allen Fällen wird gekühlt und die abgeführte Wärme mittels eines strömenden Mediums an ein anderes Medium übergeben.

Ebenfalls bekannt ist das Erwärmen oder Heizen in Verbindung mit einer Wärmepumpe, wobei einem Medium die Wärme entzogen und auf ein anderes Medium übertragen wird. Auch die Wärmepumpe arbeitet nach dem Prinzip der Kompressions-Kälte-Maschine, nur dass aus der Sicht des Anwenders Wärme zugeführt und nicht abgeführt wird. Bei jeder der genannten oder ähnlichen Anwendungen ist eine Anlage zur Übergabe thermischer Energie von einem ersten Medium an ein zweites Medium vorgesehen. Stets ist diese Anlage auf den Anwendungszweck der Gesamtanlage ausgerichtet, so dass eine Anlage zur Übergabe thermischer Energie nicht für verschiedene Anwendungen nutzbar ist und üblicherweise nur in entsprechend geringer Stückzahl hergestellt wird.

Die erfindungsgemäße Anlage zur Übergabe thermischer Energie soll möglichst vielseitig verwendbar und in entsprechend hoher Stückzahl herstellbar sein.

Die erfindungsgemäße Anlage zur Übergabe thermischer Energie von einem ersten strömenden Medium an ein zweites strömendes Medium oder umgekehrt weist die Merkmale des Anspruchs 1 auf. Danach sind ein erster Wärmetauscher, ein zweiter Wärmetauscher und eine Kompressions-Kälte-Maschine vorgesehen, wobei im ersten Wärmetauscher thermische Energie zwischen dem ersten strömenden Medium und einem Kältemittel der Kompressions-Kälte-Maschine austauschbar ist und im zweiten Wärmetauscher thermische Energie zwischen dem Kältemittel und dem zweiten strömenden Medium austauschbar ist, so dass im Ergebnis eines der beiden strömenden Medien kühlbar und das andere erwärmbar ist. Der Begriff der Kompressions-Kälte-Maschine beinhaltet auch die Funktion als Wärme-Pumpe. Die Funktion und die einzelnen Bestandteile der Kompressions-Kälte-Maschine sind grundsätzlich bekannt und müssen hier nicht näher erläutert werden. Das Kältemittel kann auch als Wärme-Transportmittel bezeichnet werden, mit dem Kältemittel wird lediglich Wärme abgeführt oder zugeführt. Die erfindungsgemäße Anlage kann sowohl im Zusammenhang mit einer Heizung, als auch für eine Kühlung verwendet werden.

Nach einem weiteren Gedanken der Erfindung ist vorgesehen, dass das zweite strömende Medium einem externen Vorrat entnehmbar, dem zweiten Wärmetauscher zuführbar und in den externen Vorrat oder einem anderen Vorrat übergebbar ist, wobei das zweite strömende Medium von einer Pumpe durch den zweiten Wärmetauscher pumpbar ist, und dass zwischen der Pumpe und dem zweiten Wärmetauscher ein Rückschlagventil vorgesehen ist. Das zweite strömende Medium ist vorzugsweise Teil eines offenen Systems. Dies ist beispielsweise der Fall, wenn die erfindungsgemäße Anlage an Bord eines Schiffes angeordnet und das zweite strömende Medium fortlaufend dem das Schiff umgebenden Wasser entnommen und wieder an dieses abgegeben wird. Durch das Rückschlagventil wird bei Stillstand der Pumpe ein Rückfluss des Mediums vermieden. Entsprechend ist das Rückschlagventil so ausgelegt und angeschlossen, dass bei ausgeschalteter Pumpe ein Rückfluss des Mediums automatisch eine Schließstellung des Rückschlagventils bewirkt.

Nach einem weiteren Gedanken der Erfindung ist parallel zum Rückschlagventil zwischen der Pumpe und dem zweiten Wärmetauscher eine selbstansaugende Pumpe vorgesehen. Die Ansaugseite der erstgenannten Pumpe kann unter ungünstigen Umständen Luft führen. Je nach Auslegung der Pumpe erfolgt dann möglicherweise keine Förderung des Mediums mehr. Um einen reibungslosen und automatischen Anlauf zu ermöglichen, ist die selbstansaugende Pumpe parallel zum Rückschlagventil vorgesehen. Die selbstansaugende Pumpe saugt das Medium und die gegebenenfalls vorhandene Luft durch die erstgenannte Pumpe hindurch, so dass schließlich die erstgenannte Pumpe ihrerseits Flüssigkeit ansaugen und mit vollem Druck in das Rückschlagventil hineinpumpen kann. Vorzugsweise ist die erstgenannte Pumpe eine nicht selbstansaugende Pumpe, etwa eine Kreiselpumpe, während die selbstansaugende Pumpe eine Membranpumpe ist und hinsichtlich Leistung und Querschnitt niedriger bzw. kleiner ausgelegt ist als die erstgenannte Pumpe.

Nach einem weiteren Gedanken der Erfindung weist das Rückschlagventil einen Schwimmer und einen Schwimmerdetektor auf. Der Schwimmerdetektor erfasst die Position des Schwimmers und gibt ein hierzu passendes Signal ab. Im einfachsten Fall detektiert der Schwimmerdetektor einerseits eine maximale Öffnungsstellung und andererseits eine hiervon in Richtung auf eine Schließstellung abweichende Position des Schwimmers. Beispielsweise ist der Schwimmer mit einem Magneten versehen, während der Schwimmerdetektor als Reed-Kontakt ausgebildet ist. Die maximale Öffnungsstellung des Schwimmers stellt sich ein, sobald die Pumpe das zweite strömende Medium durch das Rückschlagventil pumpt. Der Magnet hat dann den kürzesten Abstand zum Reed-Kontakt.

Abweichungen von der maximalen Öffnungsstellung des Schwimmers ergeben sich automatisch, sofern im System Luftblasen vorhanden sind. Der Schwimmer bewegt sich dann entweder durch sein Eigengewicht oder durch einen Federdruck in Richtung auf seine Schließstellung. Diese Abweichung von der maximalen Öffnungsstellung kann durch den Schwimmerdetektor bzw. Reed-Kontakt erfasst und zur Steuerung der Anlage oder von Teilen derselben, z. B. zum Einschalten der selbstansaugenden Pumpe verwendet werden. Vorzugsweise sind die selbstansaugende Pumpe und/oder die erstgenannte Pumpe in Abhängigkeit von einem Signal des Schwimmerdetektors schaltbar.

Nach einem weiteren Gedanken der Erfindung ist dem Rückschlagventil ein Drucksensor zugeordnet. Unter Verwendung eines Signals des Drucksensors kann beispielsweise die selbstansaugende Pumpe geschaltet werden. Der Drucksensor kann auch zugleich als Druckschalter ausgebildet sein. Drucksensor bzw. Druckschalter sind zur Funktion des Schwimmerdetektors redundante Bauteile. Die Funktion der Anlage wird dadurch abgesichert. Der Drucksensor kann auch mit größerem Abstand zum Rückschlagventil irgendwo zwischen dem Rückschlagventil und dem zweiten Wärmetauscher angeordnet sein.

Nach einem weiteren Gedanken der Erfindung ist das erste strömende Medium von einer Pumpe durch den ersten Wärmetauscher und eine Klimaanlage, Heizung oder kombinierte Kühl-/Heizanlage pumpbar, wobei zwischen der Pumpe und dem ersten Wärmetauscher ein Rückschlagventil vorgesehen ist. Das Rückschlagventil ist so angeordnet und geschaltet, dass bei ausgeschalteter Pumpe ein Rücklauf des ersten strömenden Mediums verhindert wird. Ein derartiger Rücklauf kann in ungünstigen Fällen durch Thermik in der Klimaanlage, Heizung oder kombinierten Kühl-/Heizanlage entstehen.

Vorzugsweise weist das Rückschlagventil für das erste strömende Medium einen Schwimmer und einen Schwimmerdetektor auf. Vorteile und weitere Eigenschaften dieser Maßnahme sind bereits im Zusammenhang mit dem Rückschlagventil für das zweite strömende Medium erläutert worden. Im Unterschied zum Rückschlagventil für das zweite strömende Medium ist hier (im Kreislauf des ersten strömenden Mediums) vorzugsweise keine selbstansaugende Pumpe vorgesehen. Das Signal des Schwimmerdetektors dient insbesondere zur Schaltung der Anzeige eines Druckabfalls und/oder zum Schalten der Pumpe für das erste strömende Medium. Beispielsweise kann bei fehlender maximaler Öffnungsstellung des Schwimmerdetektors die Pumpe für das erste strömende Medium abgeschaltet werden, gegebenenfalls auch mit Zeitverzug.

Analog den obigen Ausführungen kann auch dem Rückschlagventil für das erste strömende Medium ein Drucksensor zugeordnet sein, der auch mit Abstand zum Rückschlagventil angeordnet sein kann.

Nach einem weiteren Gedanken der Erfindung ist vorgesehen, dass zwischen der Pumpe für das erste strömende Medium und dem zugehörigen Rückschlagventil ein Anschluss zur Entlüftung des strömenden Mediums oder zur Befüllung mit dem strömenden Medium angeordnet ist, und dass zwischen Rückschlagventil und erstem Wärmetauscher ein Anschluss zur Befüllung mit dem strömenden Medium oder zur Entlüftung desselben angeordnet ist. Vorzugsweise erfolgt eine Befüllung des Kreislaufs mit dem ersten strömenden Medium über den Anschluss zwischen Rückschlagventil und erstem Wärmetauscher. Die Entlüftung erfolgt dann über den Anschluss zwischen Pumpe und Rückschlagventil. Der letztgenannte Anschluss ist möglichst dicht am Rückschlagventil angeordnet, so dass zwischen Rückschlagventil und Anschluss möglichst wenig Luft verbleiben kann. Die Befüllung kann beispielsweise manuell vorgenommen werden durch Anschließen und Öffnen einer Wasserleitung in Abhängigkeit von einem Signal des Schwimmerdetektors und/oder des Drucksensors.

Nach einem weiteren Gedanken der Erfindung ist die Kompressions-Kälte-Maschine reversierbar, so dass im Ergebnis wahlweise eines der beiden Medien abkühlbar oder erwärmbar ist. Mit der derart gestalteten Anlage kann nach Wahl des Anwenders von Kühlung auf Heizung oder umgekehrt umgeschaltet werden.

Nach einem weiteren Gedanken der Erfindung ist mindestens einer der Wärmetauscher zugleich Speicher für Wärme oder Kälte, wobei hierzu das für das erste oder zweite Medium im ersten oder zweiten Wärmetauscher zur Verfügung stehende Volumen ein Vielfaches, insbesondere mindestens das 20fache des für in dem selben Wärmetauscher für das Kältemittel zur Verfügung stehenden Volumens ist. Bei dieser Ausführung des Wärmetauschers ist ein sonst erforderlicher oder üblicher Speicher konstruktiv integriert durch größere Ausbildung des genannten Volumens. Dadurch werden zusätzliche Teile, insbesondere eine Verrohrung eingespart. Vorzugsweise beträgt das im Wärmetauscher zur Verfügung stehende Volumen mindestens das 50 bis 100fache des für das Kältemittel zur Verfügung stehende Volumens, insbesondere etwa das 200fache.

Nach einem weiteren Gedanken der Erfindung weist mindestens einer der Wärmetauscher zugleich ein Druckausgleichsvolumen auf, welches durch eine Druckausgleichsmembran vom Volumen für das erste oder zweite Medium getrennt ist. Durch diese Maßnahme kann auf ein sonst übliches, zusätzliches Druckausgleichsgefäß verzichtet werden. Vorteilhaft ist auch eine Kombination mit dem im voranstehenden Absatz genannten, mindestens 20fachen Volumen für das jeweilige strömende Medium im Verhältnis zum Volumen des Kältemittels.

Nach einem weiteren Gedanken der Erfindung weist mindestens einer der Wärmetauscher zugleich ein Volumen für ein weiteres strömendes Medium auf. Während voranstehend im Wärmetauscher ein Austausch der thermischen Energie zwischen einem strömenden Medium und dem Kältemittel vorgesehen ist, ist hier ein Austausch mit dem weiteren strömenden Medium alternativ oder zugleich möglich. Beispielsweise ist der zweite Wärmetauscher als Behälter ausgebildet mit Eintritt und Austritt für das erste strömende Medium. Im Behälter ist eine Rohrspirale für das Kältemittel, ebenfalls mit Eintritt und Austritt (durch Behälterwandungen) angeordnet. Zusätzlich ist nun innerhalb des Behälters außerdem eine weitere Rohrspirale als weiteres Volumen für ein weiteres strömendes Medium angeordnet, mit durch Behälterwandungen geführtem Eintritt und Austritt. Bevorzugt ist dabei an Anwendungen gedacht, bei denen thermische Energie zwischen der Rohrschlange für das Kältemittel einerseits und dem ersten strömenden Medium im Behälter andererseits ausgetauscht wird und zeitweise alternativ oder zusätzlich thermische Energie zwischen dem Kältemittel und dem weiteren strömenden Medium und/oder zwischen dem weiteren strömenden Medium und dem ersten strömenden Medium ausgetauscht werden soll.

Nach einem weiteren Gedanken der Erfindung ist mindestens einem der Wärmetauscher eine Pumpe für die Bewegung des jeweiligen strömenden Mediums zugeordnet, wobei das strömende Medium durch eine Bypassleitung im Kreislauf über die Pumpe und den Wärmetauscher führbar ist. Dadurch ist es möglich, die thermische Energie im strömenden Medium zu halten, quasi im Kreis zu führen, und Austauschvorgänge auf unvermeidliche Leitungsverluste zu beschränken.

Ein weiterer Gedanke der Erfindung sieht vor, dass das zweite Medium einem externen Vorrat entnehmbar, dem zweiten Wärmetauscher zuführbar und in den externen Vorrat zurück oder einem anderen Vorrat übergebbar, ist, wobei das zweite Medium von einer Pumpe durch den zweiten Wärmetauscher pumpbar ist, dass zwischen zweitem Wärmetauscher und den Vorräten mindestens ein Filter vorgesehen ist, um eine Verschmutzung des zweiten Wärmetauschers zu verhindern, und dass die Pumpe reversierbar ist, um die Filter oder den Filter rückzuspülen. Der Vorrat für das zweite Medium ist beispielsweise Seewasser, das fortlaufend an Bord eines Schiffes gepumpt durch den Wärmetauscher geleitet, dort erwärmt und dann wieder in das Gewässer zurückgegeben wird. Vorstellbar ist auch die Entnahme und/oder Rückführung in Verbindung mit einem größeren Tank.

Vorteilhafterweise ist das erste Medium von einer Pumpe durch den ersten Wärmetauscher pumpbar, wobei die thermische Energie (Wärme oder Kälte) des ersten Mediums zur Erwärmung oder Kühlung einer Heizung, Klimaanlage oder kombinierten Kühl-/Heizanlage vorgesehen ist. Ein wichtiges Anwendungsgebiet der Erfindung ist die Nutzung in mobilen oder stationären Klimaanlagen, etwa Klimaanlagen an Bord von Schiffen, insbesondere mit Seewasser als Kühlwasser.

Vorteilhafterweise ist an den ersten Wärmetauscher eine Klimatruhe zum Kühlen und/oder Heizen eines Raumes oder einer Fläche vorgesehen, wobei die Klimatruhe auf einer Wand oder in die Wand versenkt montierbar ist. Dabei ist auch eine nur teilweise Versenkung möglich. In einer Klimatruhe wird üblicherweise thermische Energie zwischen dem strömenden Medium (Wasser) und der durch die Klimatruhe geleiteten Luft ausgetauscht. Je nach Temperaturdifferenz zwischen dem strömenden Medium und der Luft arbeitet die Klimatruhe als Kühlung (Klimaanlage) oder Heizung.

Weiterhin kann vorgesehen sein, dass die Klimatruhe einen eigenen Wärmetauscher aufweist zum Austausch von Wärme zwischen dem ersten strömenden Medium und Luft, dass die Klimatruhe mindestens einen Lüfter bzw. Ventilator aufweist zur Förderung einer Luft-Strömung durch den eigenen Wärmetauscher, und dass Wärmetauscher und Lüfter im Wesentlichen in einer gemeinsamen Ebene aber jeweils zu dieser schräggeneigt angeordnet sind, derart, dass eine Luftaustrittsseite des Wärmetauschers und eine Lufteintrittsseite des Lüfters einen Winkel kleiner 170° einschließen. Vorzugsweise ist dieser Winkel größer als 90° und beträgt insbesondere etwa 130°. Durch die beschriebene Anordnung kann die Klimatruhe sehr flach ausgebildet werden und nimmt wenig Platz auf einer Wand in Anspruch. Auch kann die Klimatruhe mit geringem Aufwand in die Wand versenkt montiert werden.

Vorteilhafterweise ist eine Mehrzahl von Ventilatoren vorgesehen, nämlich in einer Reihe entlang einer Seite des Wärmetauschers. Auch diese Maßnahme ermöglicht eine raumsparende, flache Bauweise der Klimatruhe.

Weitere Merkmale der Erfindung ergeben sich aus den Ansprüchen und aus der Beschreibung im Übrigen. Sämtliche Merkmale können voneinander unabhängig sein. Insbesondere betrifft dies die Gestaltung der Klimatruhe und der Wärmetauscher. Vorteilhafte Ausführungsbeispiele der Erfindung werden nachfolgend anhand von Zeichnungen näher erläutert. Es zeigen:
- Fig. 1: eine Prinzipskizze einer erfindungsgemäße Anlage,
- Fig. 2: eine Prinzipskizze einer gegenüber Fig. 1 erweiterten Anlage,
- Fig. 3: einen Querschnitt durch eine Klimatruhe im Zusammenhang mit der erfindungsgemäße Anlage,
- Fig. 4: eine Draufsicht auf die Klimatruhe gemäß Fig. 3,
- Fig. 5: einen Querschnitt auf eine andere Ausführung der Klimatruhe,
- Fig. 6: eine Draufsicht auf die Klimatruhe gemäß Fig. 5,
- Fig. 7: eine Prinzipskizze eines in der erfindungsgemäßen Anlage verwendeten Wärmetauschers,
- Fig. 8: eine Prinzipskizze einer weiteren erfindungsgemäßen Anlage,
- Fig. 9: einen Längsschnitt durch ein Rückschlagventil,
- Fig. 9a: eine Seitenansicht des Rückschlagventils gemäß Fig. 9 zur Darstellung der Schnittebene der Fig. 9.

Eines von mehreren möglichen Anwendungsbeispielen der Erfindung bezieht sich auf die Nutzung einer Klimaanlage von Bord von Schiffen in Verbindung mit einer Seewasser-Kühlung. Trotz des verwendeten Begriffs Seewasser ist eine Anwendung auf Binnengewässern nicht ausgeschlossen.

In der Anlage sind ein erster Wärmetauscher 10 und ein zweiter Wärmetauscher 11 über eine Kompressions-Kälte-Maschine 12 miteinander gekoppelt. Letztere kann reversierbar ausgebildet sein, um thermische Energie wahlweise in beide Richtungen transportieren zu können. In jedem der Wärmetauscher 10, 11 ist eine mit der Kompressions-Kälte-Maschine verbundene Kältemittel-Schlange 13, 14 angeordnet. Ein Kältemittel wird von der Kompressions-Kälte-Maschine 12 zum ersten Wärmetauscher 10 und zurück bzw. zum zweiten Wärmetauscher 11 und zurück gefördert. Dabei wird entweder Wärme aus dem ersten Wärmetauscher 10 zum zweiten Wärmetauscher 11 übertragen oder umgekehrt. Eine entsprechende Leitung 15 zwischen der Maschine 12 und der Kältemittel-Schlange 13 bzw. dem zweiten Wärmetauscher 11 weist einen Temperaturfühler 16 auf.

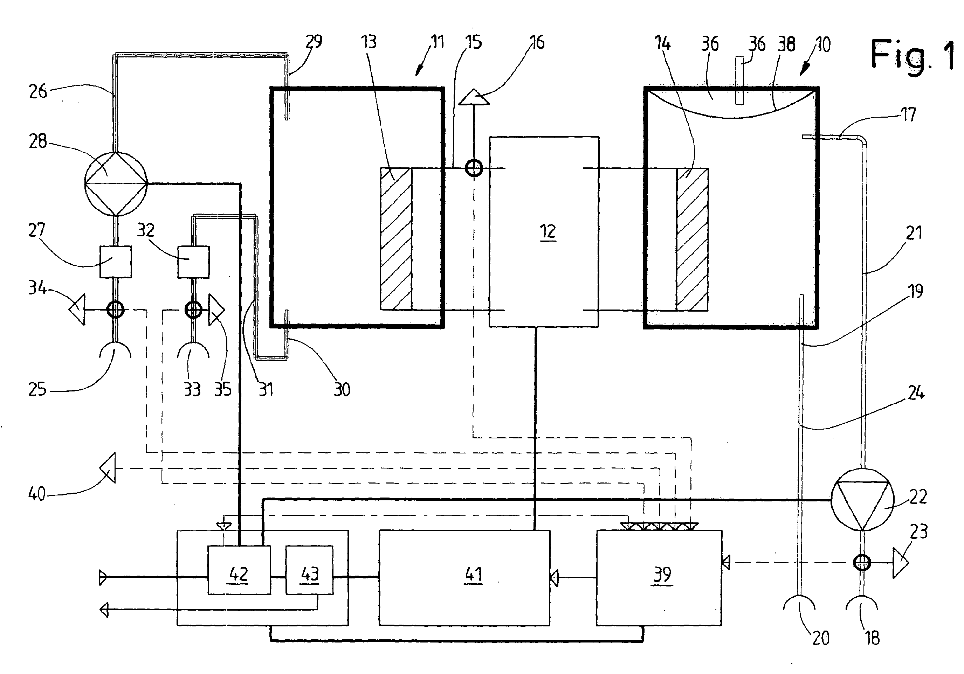

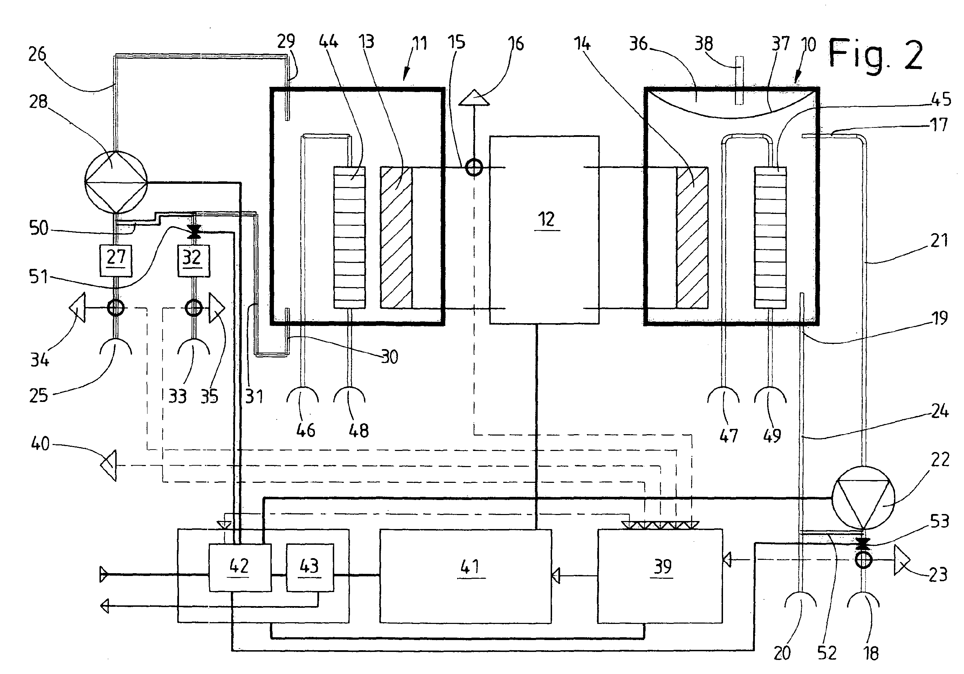

An den ersten Wärmetauscher 10 ist eine in den Fig. 1 und 2 nicht gezeigte Klimaanlage angeschlossen über einen Wasserausgang 17 mit Anschluss 18 für die Klimaanlage und Wasserrücklauf 19 mit Anschluss 20. In einer Leitung 21 zwischen dem Wasserausgang 17 und dem Anschluss 18 ist eine Pumpe 22 mit nachgeordnetem Temperaturfühler 23 vorgesehen. Eine Leitung zwischen dem Wasserrücklauf 19 und dem Anschluss 20 ist mit der Ziff. 24 bezeichnet. Im ersten Wärmetauscher 10 wird dem von der Pumpe 22 umgewälzten Wasser die Wärme entzogen und über die Maschine 12 dem zweiten Wärmetauscher 11 zugeführt. Somit steht am Anschluss 18 gekühltes Wasser für die Nutzung in der Klimaanlage zur Verfügung.

Im zweiten Wärmetauscher 11, genauer in der Kältemittel-Schlange 13 liegt nun ein erwärmtes Kältemittel vor. Diese Wärme wird aus dem zweiten Wärmetauscher abgeführt durch eine Seewasser-Kühlung. Hierzu wird frisches Seewasser über eine Ansaugöffnung 25, eine Leitung 26 mit Filter 27 und Pumpe 28 sowie einen Wassereingang 29 in den zweiten Wärmetauscher 11 geleitet. Der zweite Wärmetauscher 11 weist außerdem einen Wasserausgang 30 auf, von dem das erwärmte Seewasser über eine Leitung 31 mit Filter 32 zu einem Auslass 33 gelangt. Zwischen Filter 27 und Ansaugöffnung 25 sowie zwischen Filter 32 und Auslassöffnung 33 ist jeweils ein Temperaturfühler 34, 35 angeordnet.

Die Pumpe 38 ist reversierbar, um den Filter 27 zu reinigen. Das Eindringen von Schmutz in den zweiten Wärmetauscher 11 wird dabei durch den Filter 32 verhindert, der im anschließenden Normalbetrieb wieder gereinigt wird.

Die beiden Wärmetauscher 10, 11 sind in besonderer Weise ausgebildet, mit einem relativ großen Volumen für das über den Wassereingang 29 bzw. den Wasserrücklauf 19 einströmende Wasser im Verhältnis zum Volumen der Kältemittel-Schlagen 13, 14. Das Verhältnis beträgt etwa 200 zu 1. Dadurch sind zusätzliche Speicher für die Wärmetauscher 10, 11 nicht erforderlich. Vielmehr wird die Speicherfunktion von den Wärmetauschern übernommen.

Der zweite Wärmetauscher 11 ist auf Grund der Verbindung mit dem Seewasser Teil eines offenen Kreislaufes. Größere Druck- oder Temperaturschwankungen sind deshalb nicht zu erwarten.

Etwas anders ist die Situation im Bereich des ersten Wärmetauschers 10. Durch die angeschlossene Klimaanlage ergibt sich ein vorzugsweise geschlossener Kreislauf. Zur Vermeidung von Überdrücken und zum Ausgleich der auftretenden Temperaturschwankungen weist der erste Wärmetauscher 10 ein Druckausgleichsvolumen 36 auf, das durch eine Druckausgleichsmembran 37 vom Innenraum des Wärmetauschers 10 im Übrigen getrennt ist. Die Druckausgleichsmembran 37 ist elastisch nachgiebig. Das Druckausgleichsvolumen kann über ein Ventil 38 mit Luft oder einem anderen Gas zur Erzeugung eines definierten Gegendrucks im Druckausgleichsvolumen 36 befüllt oder entlastet werden.

Zur Steuerung der Anlage ist eine Mikroprozessorsteuerung 39 vorgesehen. Diese empfängt unter anderem die von den einzelnen Fühlern 16, 23, 34, 35 bereitgestellten Signale, sowie von einem Außentemperaturfühler 40 und regelt in Abhängigkeit davon und in Übereinstimmung mit vom Benutzer vorgegebenen Befehlen die Funktion der einzelnen Bestandteile der Anlage.

Angesteuert wird unter anderem ein Frequenzumrichter 41, aus dem die Kompressions-Kälte-Maschine 12 gespeist wird, und eine Pumpenreversiersteuerung 42 für die Seewasserpumpe 28. Auch die Pumpe 22 wird von der Steuerung 42 beaufschlagt. Zwischen der Pumpenreversiersteuerung 42 und dem Frequenzumrichter 41 ist ein Gleichstromnetzteil für insbesondere 24 Volt vorgesehen.

Die in Fig. 2 gezeigte Anlage weist gegenüber der Anlage gemäß Fig. 1 zusätzliche Merkmale auf:
In den beiden Wärmetauschern 10, 11 sind zusätzliche Tauscherschlangen 44, 45 vorgesehen, analog den Kältemittel-Schlangen 13, 14. Die Tauscherschlangen 44, 45 sind im vorliegenden Falls für die Erwärmung von Brauchwasser an Bord des Schiffes vorgesehen, etwa zum Duschen, Geschirr spülen, Heizen oder dergleichen. Jeweils an Wassereingänge 46, 47 und Wasserausgänge 48, 49 angeschlossene Verbraucher sind nicht eingezeichnet, auch nicht zusätzliche Mittel zum Steuern des Wasserkreislaufs durch die Tauscherschlangen 44, 45. An Stelle der genannten, warmes Wasser benötigenden Verbraucher können auch Kühlwasser erfordernde Verbraucher vorgesehen sein, etwa eine Motorkühlung, insbesondere im Anschluss an die Tauscherschlange 45 auf der Seite des ersten Wärmetauschers 10.

Wie zuvor beschrieben, stellt die Kältemittel-Schlange 13 durch das erwärmte Kältemittel Wärmeenergie bereit. Anstatt nun diese Wärme in das Seewasser abzuführen, ist eine Übertragung auf das Wasser in der Tauscherschlange 44 möglich. Unterstützt wird die Übertragung durch eine Beibehaltung der Strömung des Seewassers in den zweiten Wärmetauscher 11 hinein (Wassereingang 29) und aus dem Wärmetauscher hinaus (Wasserausgang 30). Um dabei die Wärme nicht über die Auslassöffnung 33 ins Seewasser abzuführen, ist eine Bypass-Leitung 50 vorgesehen, die zwischen Pumpe 28 und Filter 27 mit der Leitung 26 verbunden ist und die außerdem an die Leitung 31 unter Umgehung des Filters 32 angeschlossen ist. Ein Ventil 51 schließt bei Bedarf die Leitung 31 unmittelbar vor dem Filter 32, so dass ein Wasserkreislauf über die Bypass-Leitung 50 zustandekommt.

In analoger Weise ist für den ersten Wärmetauscher 10 ein Kurzschluss-Umlauf des ersten strömenden Mediums durch die Leitungen 21 und 24 erzielbar. In Strömungsrichtung unmittelbar hinter der Pumpe 22 ist eine Bypass-Leitung 52 zur Verbindung der Leitungen 21 und 24 vorgesehen. Beim Schließen eines zwischen dem Anschluss 18 und der Pumpe 22 vorgesehenen Ventils 53 strömt das Wasser im Kurzschluss über die Bypass-Leitung 52. Dadurch ist ein optimaler Wärmeaustausch zwischen der Kältemittel-Schlange 14 und der Tauscherschlange 45 möglich, ohne dass Energieverluste durch eine mit den Anschlüssen 18, 20 verbundene Klimaanlage oder einen anderen Verbraucher auftreten können.

Die Ventile 51, 53 sind elektrisch betätigbar, beispielsweise über die in ihrer Funktionalität entsprechend erweiterte Pumpenreversiersteuerung 42. Vorzugsweise wird die Maschine 12 bei Kurzschluss-Umlauf der strömenden Medien abgestellt.

Eine besondere Funktion erfüllt der Temperaturfühler 16 im Kältemittel-Kreislauf. Hiermit verbunden ist eine Sicherheitsabschaltung bei Über- oder Unterschreiten definierter Temperaturen. Analog können auch in Abhängigkeit von den Signalen der übrigen Sensoren bzw. Temperaturfühler Schaltvorgänge, insbesondere Sicherheitsabschaltungen vorgenommen werden.

Im Bereich der Ansaugöffnung 25 und der Auslassöffnung 33 können manuell oder elektrisch betätigbare Ventile vorgesehen sein, insbesondere sogenannte Seeventile.

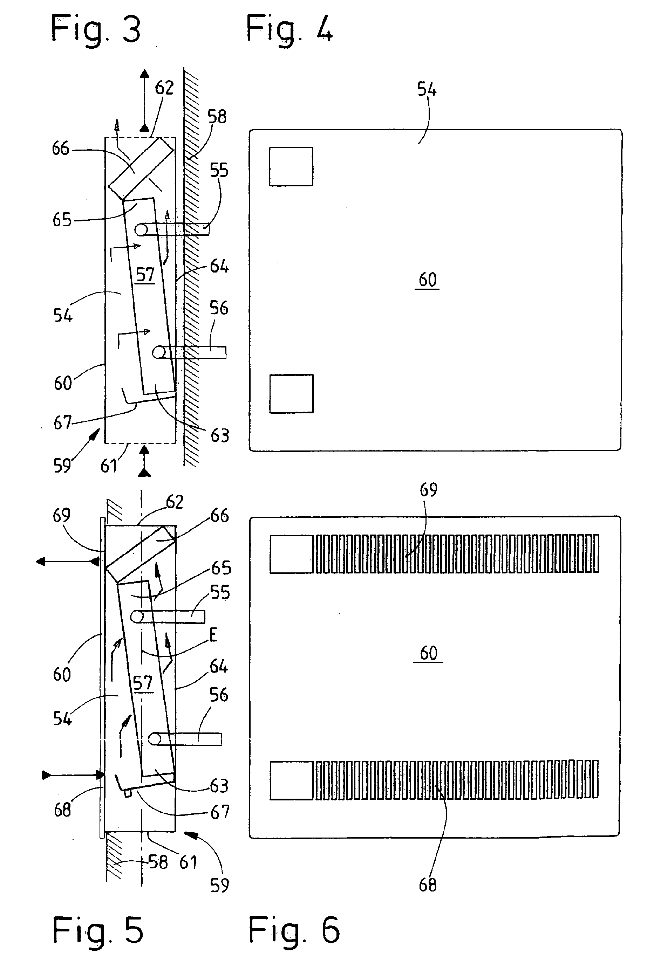

Fig. 3 bis 6 zeigen den Aufbau und die Anordnung einer Klimatruhe in zwei Varianten. Fig. 3 und 4 betreffen eine auf einer Wand montierte Klimatruhe 54. Diese weist einen Vorlauf 55 und eine Rücklauf 56 auf, die innerhalb der Klimatruhe 54 mit einem Wärmetauscher 57 verbunden und durch eine Wand 58 hindurchgeführt sind bis zu den Anschlüssen 18, 20 (Fig. 1 und 2).

Ein Gehäuse 59 der Klimatruhe 54 ist quaderförmig und flach ausgebildet, so dass es sich nur geringfügig vor der Wand 58 abhebt. Der ebenfalls flache Wärmetauscher 57 sitzt hinter einer großflächigen Vorderwand 60. Bodenwand 61 und Oberwand 62 sind im Gegensatz zu den übrigen Wandungen durchlässig ausgebildet, so dass eine aufwärtsgerichtete Luftströmung durch das Gehäuse 59 möglich ist.

Der Wärmetauscher 57 ist im Gehäuse 59 abgewinkelt angeordnet, derart, dass ein unterer Rand 63 des Wärmetauschers 57 an einer Rückwand 64 anliegt, während ein oberer Rand 65 einen nur geringen Abstand gegenüber der Vorderwand 60 aufweist oder sogar an dieser anliegt.

Oberhalb des Wärmetauschers 57 ist eine Reihe von Ventilatoren 66 angeordnet, wobei sich die Reihe in Richtung quer zur Bildebene erstreckt. Die einzelnen Ventilatoren 66 sind geneigt angeordnet, so dass sich ein Winkel zwischen den Ventilatoren (den Ventilatorebenen) und dem Wärmetauscher 57 von etwa 130° ergibt.

Die durch die Bodenwand 61 einströmende Luft gelangt in Fig. 3 von links nach rechts durch den Wärmetauscher 57, gibt dabei Wärme an das dem Wärmetauscher zugeführte kalte Wasser ab, strömt aufwärts durch die Ventilatoren 66 und tritt schließlich über die Oberwand 62 aus dem Gehäuse 59 der Klimatruhe 54 aus.

Unterhalb des Wärmetauschers 57 ist eine Kondensatwanne 67 angeordnet, die mit der Rückwand 64 verbunden ist und anfallendes Kondensat aufnimmt.

Fig. 5 und 6 zeigen die Klimatruhe 54 in einer in der Wand 58 versenkten Ausführung. Das Gehäuse 59 ist soweit in die Wand 58 hineinversenkt, dass die Vorderwand 60 mit der Wand nahezu bündig abschließt. Die Anordnung von Wärmetauscher 57 und Ventilatoren 66 im Gehäuse 59 entspricht der Anordnung gemäß Fig. 3. Lediglich am Gehäuse sind Änderungen vorgesehen. Gleichwohl sind in Fig. 5 dieselben Bezugsziffern verwendet wie in Fig. 3. Die vorhandenen Änderungen werden nachfolgend erläutert:
Bodenwand 61 und Oberwand 62 sind in der Ausführung gemäß Fig. 5 und 6 geschlossen ausgebildet. Die Luft tritt in einem unteren Bereich der Vorderwand 60 in das Gehäuse 59 ein. Hierzu weist die Vorderwand 60 nahe einer Unterkante eine entsprechend breite Einlassöffnung bzw. die gezeigte Reihe 68 von Einlassschlitzen auf. Die aus den Ventilatoren 66 ausströmende Luft gelangt über eine entsprechend breite Austrittsöffnung bzw. die gezeigte Reihe 69 von Auslassschlitzen nahe einem oberen Rand der Vorderwand 60 durch diese hindurch. Ventilatoren 66 und Wärmetauscher 57 sind auch hier gegenüber einer Ebene E der Klimatruhe 54 und gegeneinander geneigt angeordnet.

Die Klimatruhe 54 kann mit nur geringen Änderungen im Bereich des Gehäuses 59 sowohl auf einer Wand montiert als auch in der Wand versenkt angeordnet werden.

Die Klimatruhe 54 ist auch als Heizung nutzbar. Erforderlich ist hierfür die Bereitstellung entsprechender Wärme. Beispielsweise kann die Tauscherschlange 45 im ersten Wärmetauscher 10 an das Kühlwasser einer Maschine an Bord eines Schiffes angeschlossen sein.

Die beschriebene Anlage kann für weitere Anwendungszwecke modifiziert werden. Beispielsweise kann an die Leitungen 26, 31 ein Luftkühler angeschlossen sein, etwa an Fahrzeugen (Campingfahrzeuge) oder Gebäuden. Für die Pumpe 28 kann dann auch eine nicht-reversierbare Ausführung verwendet werden.

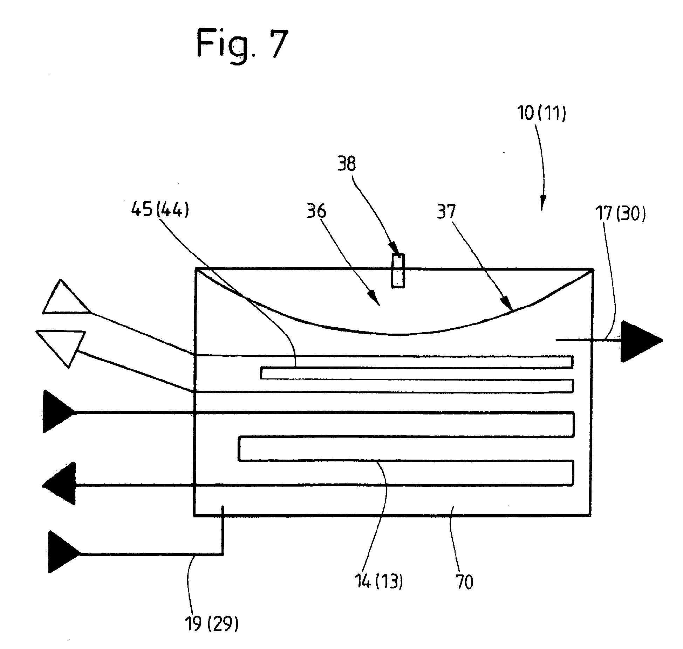

Der prinzipielle Aufbau der Wärmetauscher 10, 11 ist in Fig. 7 dargestellt. Es treten Wechselwirkungen auf zwischen zwei bis vier unterschiedlichen Volumina. An erster Stelle steht das für das strömende Medium zur Verfügung stehende Volumen 70 im Inneren des Wärmetauschers. Das Volumen wird gespeist aus dem strömenden Medium, welches über den Rücklauf 19 bzw. Eingang 29 in den Wärmetauscher eintritt und über den Ausgang 17 bzw. 30 wieder austritt.

Ein zweites Volumen liegt innerhalb der Kältemittel-Schlange 14. bzw. 13 vor. Dieses zweite Volumen ist wesentlich kleiner als das genannte erste Volumen 70 und beträgt etwa nur 1/200 hiervon. Der Wärmetauscher 10 bzw. 11 erfüllt deshalb zugleich die Funktion eines Wärmespeichers.

Zusätzlich können ein drittes Volumen, nämlich das Druckausgleichsvolumen 36, und/oder ein viertes Volumen analog dem Inhalt der Kältemittel-Schlangen 13, 14 vorgesehen sein. Der Wärmetauscher 10 in Fig. 2 enthält als viertes Volumen die Tauscherschlange 45, während im Wärmetauscher 11 in Fig. 2 als drittes Volumen die Tauscherschlange 44 gezeigt ist. Das in den Tauscherschlangen 44, 45 zur Verfügung stehende Volumen entspricht etwa dem Volumen der Kältemittel-Schlangen 13, 14.

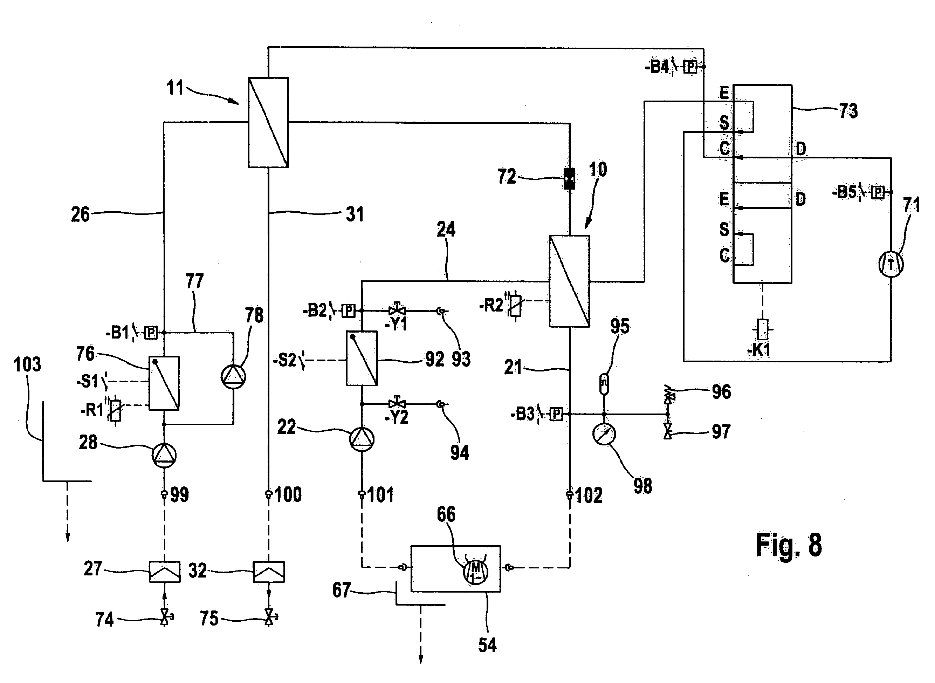

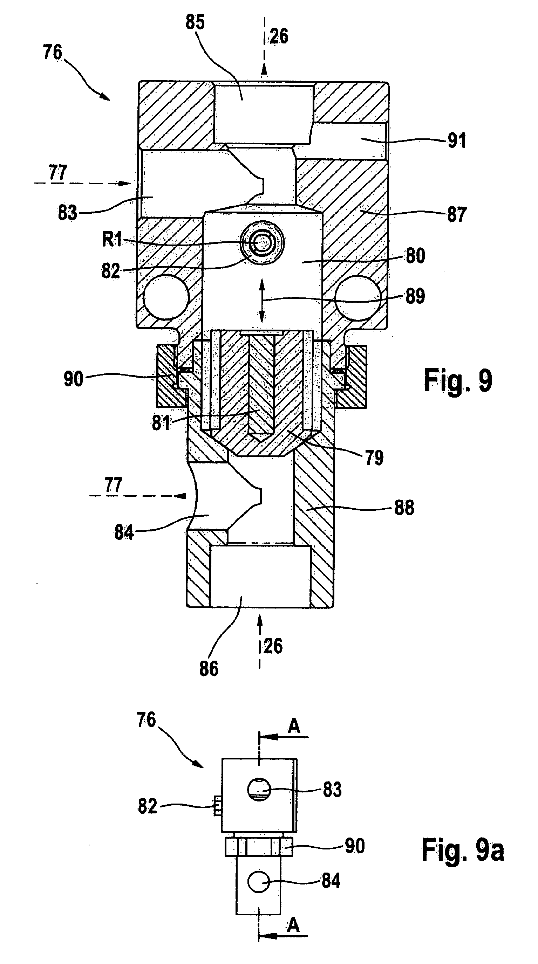

Eine weitere Ausführungsform der Erfindung wird nachfolgend anhand der Fig. 8 und 9, 9a erläutert.

Fig. 8 zeigt den Aufbau einer erfindungsgemäßen Anlage ähnlich Fig. 1. Gleichwirkende Teile sind mit gleichen Bezugsziffern versehen.

Die beiden Wärmetauscher 10, 11 sind über den Kreislauf einer Kompressionskältemaschine miteinander verbunden. Letztere ist mit ihren Einzelteilen dargestellt, nämlich mit einem Verdichter 71, einer Drossel 72 und einem auf der Seite des Verdichters 71 vorgesehenen 4/2-Wege-Ventil 73. Dieses dient der Umschaltung der Strömungsrichtung im Kreislauf zwischen den Wärmetauschern 10, 11, so dass beliebig zwischen Heiz- und Kühlbetrieb hin- und herschaltbar ist. Die genannten Komponenten 71, 72, 73 sind in den zuvor erläuterten Figuren nicht gezeichnet. Dort ist lediglich die die genannten Komponenten enthaltende Kompressionskältemaschine 12 dargestellt.

Zwischen Verdichter 71 und Ventil 73 einerseits sowie zwischen Ventil 73 und zweitem Wärmetauscher 11 andererseits ist jeweils ein Druckschalter B4, B5 angeordnet. Hierdurch ist eine zusätzliche Steuerung des Verdichters 71 oder anderer Anlagenteile möglich.

Eine Seite des zweiten Wärmetauschers 11 ist an ein offenes System angeschlossen. Beispielsweise ist die Anlage an Bord eines Schiffes vorgesehen und dient zur Klimatisierung von Kabinen. Der zweite Wärmetauscher 11 wird von Seewasser (auch Süßwasser ist möglich) als Kühlwasser durchströmt. Angesaugt wird das Kühlwasser durch eine nicht gezeigte Leitung, die an ein Ventil 74 angeschlossen ist. Analog wird das im zweiten Wärmetauscher 11 erwärmte Wasser durch das Ventil 75 abgegeben, etwa in eine zum Seewasser offene Leitung.

Zwischen der Pumpe 28 und dem zweiten Wärmetauscher 11 ist bei dieser Ausführungsform ein Rückschlagventil 76 angeordnet. Parallel zum Rückschlagventil 76 ist eine Leitung 77 mit einer Pumpe 78 vorgesehen. Die Pumpe 28 ist eine nicht selbstansaugende Kreiselpumpe, während die Pumpe 78 eine selbstansaugende Pumpe mit geringerer Leistung ist, beispielsweise eine Membranpumpe.

Die Flüssigkeit in der Leitung 26 soll in der vorliegenden Ausführungsform nur in eine Richtung gefördert werden, nämlich vom Ventil 74 über die Pumpe 28, das Rückschlagventil 76 und den zweiten Wärmetauscher 11 zum Ventil 75. Bei Stillstand der Pumpe 28 verhindert das Rückschlagventil 76 einen Rückfluss der in der Leitung 26 stehenden Flüssigkeit aus dem Ventil 74 heraus (z. B. ins Seewasser zurück). Unterhalb des Rückschlagventils 76, also schon im Bereich der Pumpe 28, kann sich auf diese Weise die Leitung 26 mit Luft füllen. Dadurch wird die zwar günstig herstellbare aber nicht selbstansaugende Kreiselpumpe 28 unwirksam. Die Flüssigkeitsförderung durch den zweiten Wärmetauscher 11 ist gestört.

Abhilfe schafft hier die selbstansaugende Pumpe 78. Diese saugt zwangsläufig Flüssigkeit an, auch wenn im Bereich der Pumpe 28 Luft vorhanden ist. Dadurch füllt sich in Kürze die gesamte Leitung 26 wieder mit Flüssigkeit, so dass auch die Pumpe 28 wieder wirksam wird und so dass Rückschlagventil 76 aufdrückt. Dabei sind Leitungsquerschnitt und Leistung der Pumpe 78 geringer bemessen als bei der Pumpe 28, so dass das Rückschlagventil 76 sicher öffnet. Nach dem Anlauf der Pumpe 28 kann die Pumpe 78 wieder abgestellt werden.

Das Rückschlagventil 76 ist mit zusätzlichen Detektoren versehen, siehe auch Fig. 9. Das Rückschlagventil 76 weist als Rückschlagkörper einen Schwimmer 79 auf, der parallel zur Strömungsrichtung auf- und abbewegbar ist. Gezeigt in Fig. 9 ist die untere Stellung des Schwimmers 79, die Schließstellung.

Der Schwimmer 79 ist mittig mit einem parallel zur Strömungsrichtung angeordneten Magneten 81 versehen. In einer nicht gezeigten Öffnungsstellung des Schwimmers 79 liegt der Magnet 81 vor einem Reed-Kontakt 82 - in Fig. 8 als S1 bezeichnet.

Bei laufender und wirksamer Pumpe 28 drückt die Flüssigkeitsströmung den Schwimmer 79 in die Öffnungsstellung, so dass der Reed-Kontakt 82 anspricht. Sobald Luft im Rückschlagventil 76 auftritt, sinkt der Schwimmer 79 in die gezeigte Schließstellung. Dadurch ändert der Reed-Kontakt 82 seinen Schaltzustand. Mit dieser Änderung des Schaltzustands kann die Funktion der selbstansaugenden Pumpe 78 ausgelöst und auch wieder gestoppt werden. Die Pumpe 28 kann parallel dazu weiterlaufen. Die Schaltlogik kann so vorgesehen sein, dass das Einschalten der Pumpe 78 eine eingeschaltete Pumpe 28 voraussetzt. Ein kurzzeitiger Leerlauf der Pumpe 28, etwa bei Luft im System, ist unschädlich. Die Pumpe 78 sorgt sehr schnell für eine Abförderung der vorhandenen Luft und für eine vollständige Füllung der Leitung 26 mit Flüssigkeit.

In Fig. 9 erkennbar sind quer zur Strömungsrichtung (und damit quer zur Schwimmerbewegungsrichtung) vorgesehene Anschlussöffnungen 83, 84 für die Leitung 77. Konzentrisch zur Schwimmerbewegungsrichtung sind Anschlussöffnungen 85, 86 für die Leitung 26 vorgesehen. Diese weisen einen deutlich größeren Querschnitt auf als die Anschlussöffnungen 83, 84.

Das Rückschlagventil 76 ist mit einem zweiteiligen Gehäuse versehen. Die beiden Gehäuseteile 87, 88 schließen in Schwimmerbewegungsrichtung (Pfeil 89) aneinander an und sind durch eine Überwurfmutter 90 miteinander verbunden. Die Teilung des Gehäuses des Rückschlagventils 76 ist derart, dass auch die Schwimmerkammer geteilt ist, so dass sich der Schwimmer 79 in seiner Schließstellung im unteren Ventilgehäuseteil 88 und in seiner Öffnungsstellung im oberen Ventilgehäuseteil 87 aufhält. Dem unteren Ventilgehäuseteil 88 zugeordnet sind die Anschlussöffnungen 84 und 86, während die beiden anderen Anschlussöffnungen 83 und 85 dem oberen Ventilgehäuseteil 87 zugeordnet sind.

Das Rückschlagventil 76 weist hier zwei weitere Besonderheiten auf. Zum einen ist im Ventil ein auch in Fig. 8 angedeuteter Temperatursensor R1 vorgesehen. Dessen Signal kann für eine Steuerung der Anlage verwendet werden. Der Sensor R1 sitzt im Reed-Kontakt 82.

Außerdem ist ein Druckschalter B1 an der zum zweiten Wärmetauscher 11 ausgehenden Anschlussöffnung 85 vorgesehen. In Fig. 9 ist eine der Anschlussöffnung 83 gegenüberliegende Bohrung 91 zum Einsetzen des Druckschalters B1 gezeichnet. Die Funktion des Druckschalters B1 ist vorzugsweise redundant zur Funktion des Reed-Kontakts 82 und stellt ein Sicherheitselement dar. Bei einem Druck von etwa 1 bar oder weniger wird davon ausgegangen, dass Luft im System und die Pumpe 28 nicht voll wirksam ist. Nur bei höherem Druck wird von einer ordnungsgemäßen Funktion ausgegangen und der Betrieb der Pumpe 78 vermieden. Vorzugsweise liegt der im Druckregler B1 eingestellte Grenzdruck über dem von der Pumpe 78 erzeugten Druck.

An den ersten Wärmetauscher 10 ist die Klimatruhe 54 in einem geschlossenen Kreislauf angeschlossen. Im Rücklauf, also zwischen der Klimatruhe 54 und dem ersten Wärmetauscher 10 sind die Pumpe 22 und ein Rückschlagventil 92 angeordnet. Dieses ist genauso ausgebildet wie das Rückschlagventil 76 gemäß Fig. 9, auch mit Reed-Schalter S2 und Druckschalter B2, aber ohne den in Fig. 8 gezeigten Temperatursensor R1.

Vor und hinter dem Rückschlagventil 92 sind Ventile Y1 und Y2 mit entsprechenden Anschlussstutzen 93, 94 vorgesehen. Hierüber kann bei Bedarf eine Befüllung des geschlossenen Kreislaufs, insbesondere mit Wasser erfolgen, etwa beim ersten Befüllen oder nach Wartungsarbeiten oder bei aus anderen Gründen im System vorhandener Luft. Die Befüllung mit Wasser erfolgt dann über das Ventil Y1 bzw. den Anschlussstutzen 93. Das einströmende Wasser wird durch das Rückschlagventil 92 am Fluss in Richtung auf die Pumpe 22 und die Klimatruhe 54 gehindert. Im System vorhandene Luft wird durch das geöffnete Ventil Y2 und aus dem Anschlussstutzen 94 hinausgedrückt.

Der Reed-Schalter S2 des Rückschlagventils 92 dient hier der Signalisierung einer von der Öffnungsstellung abweichenden Position des Schwimmers. Damit kann eine optische oder akustische Anzeige gekoppelt sein, so dass der Benutzer weiß, wann im System nahe der Pumpe 22 Luft vorhanden ist.

Zwischen dem ersten Wärmetauscher 10 und der Klimatruhe 54 ist entlang der Leitung 21 eine Sicherheitseinrichtung vorgesehen, bestehend aus einem Druckschalter B3, einem Druckausgleichsbehälter 95, einem Sicherheitsventil 96 und einem Schnellentlüftungsventil 97. Zusätzlich kann ein Manometer 98 vorgesehen sein.

Die Strömungsrichtung im Kreislauf zwischen Klimatruhe 54 und erstem Wärmetauscher 10 liegt vorzugsweise fest, nämlich von der Pumpe 22 über das Rückschlagventil 92 zum ersten Wärmetauscher 10 und von dort zur Klimatruhe 54.

Analog ist vorzugsweise auch die Strömungsrichtung im offenen System des zweiten Wärmetauschers 11 festgelegt, nämlich vom Filter 27 über die Pumpe 28 und das Rückschlagventil 76 zum zweiten Wärmetauscher 11 und von dort über den Filter 32 zum Ventil 75. Eine Rückspülung ist in der Ausführungsform gemäß Fig. 8 nicht vorgesehen. Gleichwohl sollen beide Filter 27, 32 das Leitungssystem gegen von außen kommendes Wasser schützen. Beispielsweise kann bei Stillstand der Anlage über das offene System auch Seewasser bis zum Filter 32 gelangen. In der bevorzugten praktischen Ausführung der Anlage sind beide Filter 27, 32 so angeordnet, dass sie dem Leitungssystem leicht entnehmbar und reinigbar sind.

Bevorzugt ist ein kompakter zusammenhängender Aufbau der Anlage insgesamt. In Fig. 8 erkennbar sind vier Anschlüsse 99, 100, 101, 102 als Trennstellen zwischen durchgezogen und gestrichelt gezeichneten Leitungen. Sämtliche Anlagenteile oberhalb der Anschlüsse 99 bis 102 - einschließlich des Verdichterkreislaufs mit den Teilen 71, 72, 73 - sind in einem gemeinsamen Gehäuse angeordnet und auf diese Weise leicht an einen Einbauort bringbar und dort aufstellbar. Die Anschlüsse 99 bis 102 sowie die Anschlussstutzen 93, 94 sind an einer gemeinsamen Gehäuseaußenwand angeordnet. Hieran kann beispielsweise auf einfache Weise mit entsprechenden Leitungen die Klimatruhe 54 angeschlossen werden.

Das genannte Gehäuse oder das Rückschlagventil 76 allein weisen eine Tauwasserableitung 103 auf, entsprechend der Funktion der Kondensatwanne 67 an der Klimatruhe 54.

In Fig. 8 nicht gezeigt ist die elektronische Steuerung der Anlage. Diese kann abhängig sein von Signalen verschiedener Sensoren. Bereits genannt sind Druckschalter und Reed-Kontakte bzw. -Schalter sowie Temperatursensoren. Hierzu zählt auch ein Temperatursensor R2 am ersten Wärmetauscher 10. Der Aufbau des Wärmetauschers 10 ist vorzugsweise derart, dass eine Verbindung zwischen den Leitungen 21, 24 in sich konzentrisch eine dünne Leitung aufnimmt, welche mit der Drossel 72 und dem Ventil 73 in Verbindung steht. Während dieses konzentrischen Verlaufs findet der gewünschte Wärmeübergang zwischen den enthaltenen Flüssigkeiten statt. Entlang dieser Wärmeübergangsstrecke ist der Temperatursensor R2 angeordnet und zwar von der Leitung 24 kommend nach etwa 40% bis 80% der Länge der Wärmeübergangsstrecke. Im Kühlbetrieb kann es bei Abschaltung der Klimatruhe 54 unter ungünstigen Bedingungen zu einer Vereisung im ersten Wärmetauscher 10 kommen. Dies kann über entsprechende Signale des Temperatursensors R2 und Auswertung der Signale mit entsprechender Anlagensteuerung verhindert werden.

### Bezugszeichenliste:

- 10: erster Wärmetauscher
- 11: zweiter Wärmetauscher
- 12: Kompressions-Kälte-Maschine
- 13: Kältemittel-Schlange
- 14: Kältemittel-Schlange
- 15: Leitung
- 16: Temperaturfühler
- 17: Wasserausgang
- 18: Anschluss
- 19: Wasserrücklauf
- 20: Anschluss
- 21: Leitung
- 22: Pumpe
- 23: Temperaturfühler
- 24: Leitung
- 25: Ansaugöffnung
- 26: Leitung
- 27: Filter
- 28: Pumpe
- 29: Wassereingang
- 30: Wasserausgang
- 31: Leitung
- 32: Filter
- 33: Auslassöffnung
- 34: Temperaturfühler
- 35: Temperaturfühler
- 36: Druckausgleichsvolumen
- 37: Druckausgleichsmembran
- 38: Ventil
- 39: Mikroprozessor-Steuerung
- 40: Außentemperaturfühler
- 41: Frequenzumrichter
- 42: Pumpenreversiersteuerung

- 43: Gleichstromnetzteil
- 44: Tauscherschlange
- 45: Tauscherschlange
- 46: Wassereingang
- 47: Wassereingang
- 48: Wasserausgang
- 49: Wasserausgang
- 50: Bypass-Leitung
- 51: Ventil
- 52: Bypass-Leitung
- 53: Ventil
- 54: Klimatruhe
- 55: Vorlauf
- 56: Rücklauf
- 57: Wärmetauscher
- 58: Wand
- 59: Gehäuse
- 60: Vorderwand
- 61: Bodenwand
- 62: Oberwand
- 63: unterer Rand
- 64: Rückwand
- 65: oberer Rand
- 66: Ventilator
- 67: Kondensatwanne
- 68: Reihe Einlasschlitze
- 69: Reihe Auslasschlitze
- 70: Volumen
- 71: Verdichter
- 72: Drossel
- 73: 4/2-Wege-Ventil
- 74: Ventil
- 75: Ventil
- 76: Rückschlagventil
- 77: Leitung
- 78: Pumpe
- 79: Schwimmer
- 80: Schwimmerkammer
- 81: Magnet
- 82: Reed-Kontakt
- 83: Anschlussöffnung
- 84: Anschlussöffnung
- 85: Anschlussöffnung
- 86: Anschlussöffnung
- 87: Ventilgehäuseteil
- 88: Ventilgehäuseteil
- 89: Pfeil
- 90: Überwurfmutter
- 91: Anschlussöffnung
- 92: Rückschlagventil
- 93: Anschlussstutzen
- 94: Anschlussstutzen
- 95: Druckausgleichsbehälter
- 96: Sicherheitsventil
- 97: Schnellentlüftungsventil
- 98: Manometer
- 99: Anschluss
- 100: Anschluss
- 101: Anschluss
- 102: Anschluss

- B1: Druckschalter
- B2: Druckschalter
- B3: Druckschalter
- B4: Druckschalter
- B5: Druckschalter
- R1: Temperatursensor
- R2: Temperatursensor
- S1: Reed-Schalter
- S2: Reed-Schalter
- Y1: Ventil
- Y2: Ventil

## Patentansprüche

1. Anlage zur Übergabe thermischer Energie von einem ersten strömenden Medium an ein zweites strömendes Medium oder umgekehrt, mit einem ersten Wärmetauscher (10), einem zweiten Wärmetauscher (11) und einer Kompressions-Kälte-Maschine (12), wobei im ersten Wärmetauscher (10) thermische Energie zwischen dem ersten strömenden Medium und einem Kältemittel der Kompressions-Kälte-Maschine (12) austauschbar ist und im zweiten Wärmetauscher (11) thermische Energie zwischen dem Kältemittel und dem zweiten strömenden Medium austausbar ist, so dass im Ergebnis eines der beiden strömenden Medien kühlbar und das andere erwärmbar ist.

2. Anlage nach Anspruch 1, **dadurch gekennzeichnet, dass** das zweite strömende Medium einem externen Vorrat entnehmbar, dem zweiten Wärmetauscher (11) zuführbar und in den externen Vorrat oder einen anderen Vorrat übergebbar ist, wobei das zweite strömende Medium von einer Pumpe (28) durch den zweiten Wärmetauscher (11) pumpbar ist, und dass ein Rückschiagventii (76) vorgesehen ist, welches vorzugsweise zwischen der Pumpe (28) und dem zweiten Wärmetauscher (11) angeordnet ist.

3. Anlage nach Anspruch 2, **dadurch gekennzeichnet, dass** parallel zum Rückschlagventil (76) zwischen der Pumpe (28) und dem zweiten Wärmetauscher (11) eine selbstansaugende Pumpe (78) vorgesehen ist.

4. Anlage nach Anspruch 2, **dadurch gekennzeichnet, dass** das Rückschlagventil (76) einen Schwimmer (81) und einen Schwimmerdetektor aufweist.

5. Anlage nach Anspruch 4, **dadurch gekennzeichnet, dass** die selbstansaugende Pumpe (78) und/oder die Pumpe (28) in Abhängigkeit von einem Signal des Schwimmerdetektors schaltbar sind.

6. Anlage nach Anspruch 2, **dadurch gekennzeichnet, dass** dem Rückschlagventil (76) ein Drucksensor (B1) zugeordnet ist.

7. Anlage nach Anspruch 1, **dadurch gekennzeichnet, dass** das erste strömende Medium von einer Pumpe (22) durch den ersten Wärmetauscher (10) und eine Klimaanlage, Heizung oder kombinierte Kühl-/Heizanlage pumpbar ist, und dass vorzugsweise zwischen der Pumpe (22) und dem ersten Wärmetauscher (10) ein Rückschlagventil (92) vorgesehen ist.

8. Anlage nach Anspruch 7, **dadurch gekennzeichnet, dass** das Rückschlagventil (92) einen Schwimmer und einen Schwimmerdetektor aufweist.

9. Anlage nach Anspruch 8, **dadurch gekennzeichnet, dass** die Pumpe (22) in Abhängigkeit von einem Signal des Schwimmerdetektors des Rückschlagventils (92) schaltbar ist.

10. Anlage nach Anspruch 8, **dadurch gekennzeichnet, dass** dem Rückschlagventil (92) ein Drucksensor (B2) zugeordnet ist.

11. Anlage nach Anspruch 8, **dadurch gekennzeichnet, dass** zwischen Pumpe (22) und Rückschlagventil (92) ein Anschluss (94) zur Entlüftung des strömenden Mediums oder zur Befüllung mit dem strömenden Medium vorgesehen ist, und dass zwischen Rückschlagventil (92) und erstem Wärmetauscher (10) ein Anschluss (93) zur Befüllung mit dem strömenden Medium oder zur Entlüftung desselben vorgesehen ist.

12. Anlage nach Anspruch 1, **dadurch gekennzeichnet, dass** die Kompressions-Kälte-Maschine (12) reversierbar ist, so dass im Ergebnis wahlweise eines der beiden strömenden Medien abkühlbar oder erwärmbar ist.

13. Anlage nach Anspruch 1, **dadurch gekennzeichnet, dass** mindestens einer der Wärmetauscher (10, 11) zugleich Speicher für Wärme oder Kälte ist, und dass hierzu das für das erste oder zweite strömende Medium im ersten oder zweiten Wärmetauscher zur Verfügung stehende Volumen (70) ein Vielfaches, insbesondere mindestens das 20fache des für in demselben Wärmetauscher für das Kältemittel zur Verfügung stehende Volumens ist.

14. Anlage nach Anspruch 1, **dadurch gekennzeichnet, dass** mindestens einer der Wärmetauscher (10, 11) zugleich ein Volumen (Tauscherschlange 44, 45) für ein weiteres strömendes Medium aufweist.

15. Anlage nach Anspruch 1, **dadurch gekennzeichnet, dass** mindestens einem der Wärmetauscher (10, 11) eine Pumpe (22, 28) für die Bewegung des jeweiligen ersten oder zweiten strömenden Mediums zugeordnet ist, und dass mindestens eines der strömenden Medien durch eine Bypass-Leitung (50, 52) im Kreislauf über die zugehörige Pumpe und den Wärmetauscher führbar ist.

16. Anlage nach Anspruch 1, **dadurch gekennzeichnet, dass** das zweite strömende Medium einem externen Vorrat entnehmbar, dem zweiten Wärmetauscher (11) zuführbar und in den externen Vorrat oder einen anderen Vorrat übergebbar ist, wobei das zweite strömende Medium von einer Pumpe (28) durch den zweiten Wärmetauscher (11) pumpbar ist, dass zwischen zweitem Wärmetauscher (11) und dem Vorrat bzw. den Vorräten mindestens ein Filter (27, 32) vorgesehen ist, um eine Verschmutzung des zweiten Wärmetauschers (11) zu verhindern, und dass die Pumpe (28) vorzugsweise reversierbar ist, insbesondere um mindestens einen der Filter rückzuspülen.

17. Anlage nach Anspruch 1 **gekennzeichnet durch** mindestens eine an den ersten Wärmetauscher (10) angeschlossene Klimatruhe (54) zum Kühlen und/oder Heizen eines Raumes oder einer Fläche, wobei die Klimatruhe (54) auf einer Wand (58) oder in die Wand (58) versenkt montierbar ist.

18. Anlage nach Anspruch 17, **dadurch gekennzeichnet, dass** die Klimatruhe (54) einen eigenen Wärmetauscher (57) aufweist zum Austausch von Wärme zwischen dem ersten strömenden Medium und Luft, dass die Klimatruhe (54) mindestens einen Lüfter bzw. Ventilator (66) aufweist zur Förderung einer Luft-Strömung durch den Wärmetauscher (57), und dass Wärmetauscher (57) und Lüfter im Wesentlichen in einer gemeinsamen Ebene aber jeweils zu dieser schräg geneigt angeordnet sind, derart, dass eine Luftaustrittsseite des Wärmetauschers (57) und eine Lufteintrittsseite des Lüfters einen Winkel kleiner 170° einschließen.

19. Anlage nach Anspruch 18, **dadurch gekennzeichnet, dass** eine Mehrzahl von Ventilatoren (66) vorgesehen ist, nämlich in einer Reihe entlang einer Seite (oberer Rand 65) des Wärmetauschers (57).
